# EUROPEAN PATENT APPLICATION

(11) **EP 4 657 565 A2**
(43) Date of publication of application: **03.12.2025**
(21) Application number: 25179197.6
(22) Date of filing: 27.05.2025
(51) Int. Cl.: H01M 4/48, H01M 4/587

(54) **COATING, BATTERY, AND ELECTRICITY-CONSUMPTION DEVICE**

(30) Priority: 28.05.2024 CN 202410674768
(71) Applicant: Xiamen Hithium Energy Storage Technology Co., Ltd., Xiamen, Fujian 361100 (CN)
(72) Inventor: CHEN, Bili, Xiamen 361100 (CN); ZHENG, Jianming, Xiamen 361100 (CN); LING, Xueqiang, Xiamen 361100 (CN)
(74) Representative: DREISS Patentanwälte PartG mbB

(57) **Abstract**

The present disclosure relates to the technical field of coatings, and specifically discloses a coating, a battery, and an electricity-consumption device. A total heat release of the coating in a first temperature range and a second temperature range ranges from 30 J/mg to 60 J/mg. The first temperature range is from 120°C to 220°C. The second temperature range is from 220°C to 270°C.

## Description

This application claims the priority of Chinese Patent Application No. 202410674768.0 filed on May 28, 2024, titled "COATING, BATTERY, AND ELECTRICITY-CONSUMPTION DEVICE".

### FIELD

The present disclosure relates to the technical field of coatings, and more particularly, to a coating, a battery, and an electricity-consumption device.

### BACKGROUND

The existing heat dissipation coatings on material surfaces primarily enhance the heat dissipation performance of materials by improving the radiation efficiency of the material surface, especially the infrared radiation efficiency. These coatings enable the material to radiate heat into the atmosphere at an infrared wavelength of 8 µm to 13.5 µm, which reduces both the surface and internal temperatures of the material, resulting in significant cooling effects.

With the widespread use of energy storage batteries and energy storage systems, research and development efforts have focused heavily on using phase change materials or flame-retardant coatings for heat dissipation. However, technologies specifically aimed at addressing overcharge failures are still relatively lacking. With the increasing demand for energy storage batteries, battery cell safety is receiving more and more attention, especially in terms of overcharge safety. During overcharging, the battery cell temperature rises continuously due to irreversible accumulation.

At present, there are many designs based on heat dissipation coatings, but most of them are tailored for use in electronic devices. There is a lack of coating development and application specifically focused on improving battery cell safety.

### SUMMARY

In a first aspect of the present disclosure, the present disclosure provides a coating. According to an embodiment of the present disclosure, a total heat release of the coating in a first temperature range and a second temperature range is from 30 J/mg to 60 J/mg; the first temperature range is from 120°C to 220°C; the second temperature range is from 220°C to 270°C.

In a second aspect of the present disclosure, the present disclosure provides a battery. According to an embodiment of the present disclosure, the battery includes a battery cell and a coating provided on a surface of the battery cell. The coating is the coating described in the first aspect.

In a third aspect of the present disclosure, the present disclosure provides an electricity-consumption device. According to an embodiment of the present disclosure, the electricity-consumption device includes the battery described in the second aspect.

### BRIEF DESCRIPTION OF THE DRAWINGS

The above and/or additional aspects and advantages of the present disclosure will become more apparent and easily understood from the following description of embodiments in conjunction with the accompanying drawings.

The figure shows the differential scanning calorimetry (DSC) test results of the coatings in Example 3, Example 4, Example 6, and Comparative Example 2 of the present disclosure.

### DETAILED DESCRIPTION

The embodiments of the present disclosure are described in detail below. Examples of the embodiments are illustrated in the accompanying drawings, where the same or similar reference numbers consistently indicate the same or similar elements, or elements with the same or similar functions. The embodiments described below with reference to the drawings are illustrative only, and are intended to explain, rather than limit, the present disclosure.

In a first aspect of the present disclosure, the present disclosure provides a coating. According to an embodiment of the present disclosure, a total heat release of the coating in a first temperature range and a second temperature range ranges from 30 J/mg to 60 J/mg; the first temperature range is from 120°C to 220°C; the second temperature range is from 220°C to 270°C.

With the method according to the embodiments of the present disclosure, by controlling the total heat release of the coating between 120°C and 270°C to be between 30 J/mg and 60 J/mg, the present disclosure can effectively disperse the heat accumulation of the battery cell between 100°C and 150°C, suppress side reactions at the battery's negative electrode, and prevent the melting and breakdown of the separator, thereby improving thermal runaway of the battery cell during overcharging and achieving rapid heat dissipation of the battery cell.

The applicant found that during battery overcharging, the temperature of the battery cell continues to rise due to irreversible accumulation. When the internal temperature reaches 80°C to 140°C, the solid electrolyte interface (SEI) film decomposes, triggering side reactions between the negative electrode and the electrolyte, which accelerates thermal runaway inside the cell. When the temperature reaches around 150°C, the separator is at a risk of melting and breaking down, causing a short circuit in the cell, which can lead to serious thermal runaway, and even fire or explosion. By controlling the heat release of the coating between 120°C and 270°C, the present disclosure can effectively disperse the heat accumulation of the battery cell within a specific temperature range, suppress side reactions at the battery's negative electrode, and prevent the melting and breakdown of the separator, thereby improving thermal runaway of the battery cell during overcharging and achieving rapid heat dissipation of the battery cell.

According to an embodiment of the present disclosure, the coating has a total heat release of 30 J/mg to 60 J/mg in the first temperature range and the second temperature range, for example, 30 J/mg, 35 J/mg, 40 J/mg, 45 J/mg, 50 J/mg, 55 J/mg, 60 J/mg, etc. Preferably, the total heat release is 30 J/mg to 55 J/mg. The applicant found that the higher the heat release of the coating within the temperature range up to 270°C, the better the heat dissipation performance.

According to a preferred embodiment of the present disclosure, the heat release of the coating within the first temperature range is higher than that within the second temperature range, thus achieving better heat dissipation performance.

According to an embodiment of the present disclosure, a heat release of the coating in the first temperature range is from 5 J/mg to 30 J/mg, for example, 5 J/mg, 6 J/mg, 7 J/mg, 8 J/mg, 9 J/mg, 10 J/mg, 11 J/mg, 12 J/mg, 13 J/mg, 14 J/mg, 15 J/mg, 16 J/mg, 17 J/mg, 18 J/mg, 19 J/mg, 20 J/mg, 21 J/mg, 22 J/mg, 23 J/mg, 24 J/mg, 25 J/mg, 26 J/mg, 27 J/mg, 28 J/mg, 29 J/mg, 30 J/mg, etc.

According to an embodiment of the present disclosure, a heat release of the coating in the second temperature range is from 7 J/mg to 25 J/mg, for example, 7 J/mg, 8 J/mg, 9 J/mg, 10 J/mg, 11 J/mg, 12 J/mg, 13 J/mg, 14 J/mg, 15 J/mg, 16 J/mg, 17 J/mg, 18 J/mg, 19 J/mg, 20 J/mg, 21 J/mg, 22 J/mg, 23 J/mg, 24 J/mg, 25 J/mg, etc.

Specifically, the above-described heat release can be obtained by performing a differential scanning calorimetry (DSC) test on the coating. By performing the DSC test on the coating, the DSC curve of the coating is obtained. The DSC curve has exothermic peaks in the first temperature range and the second temperature range, respectively. The exothermic peaks are integrated to obtain the heat releases of the coating in the first temperature range and the second temperature range, respectively. The sum of the two represents the total heat releases of the coating in the first temperature range and the second temperature range.

According to ab embodiment of the present disclosure, the DSC curve of the coating has a first exothermic peak in the first temperature range with a peak temperature of 145°C to 185°C.

The DSC curve of the coating has a second exothermic peak in the second temperature range with a peak temperature of 220°C to 270°C. Therefore, the heat conduction between the overcharged battery cell with thermal runaway and the coating, as well as the heat radiation of the coating are matched, thereby optimizing the ratio of the heat conduction to the heat radiation.

Specifically, the "peak temperature" refers to the temperature value corresponding to the highest point of the exothermic peak on the DSC curve.

Specifically, the number of the first exothermic peak and the second exothermic peak is not particularly limited. That is, the DSC curve of the coating may have one or more exothermic peaks in the first temperature range, and the same applies to the second temperature range.

According to an embodiment of the present disclosure, the coating includes graphite and an inorganic metal oxide. A mass ratio of the graphite to the inorganic metal oxide ranges from (1:5) to (7:3). In this way, the overall heat dissipation temperature range of the prepared coating can cover 100°C to 150°C. Furthermore, when the mass ratio of the graphite to the inorganic metal oxide ranges from (4:11) to (2:1), the overcharge cut-off temperature of the battery cell can be significantly reduced, achieving better heat dissipation performance. The "overcharge cut-off temperature" refers to the temperature of the battery cell when the overcharge test reaches the cut-off voltage condition. The cut-off voltage is 1.5 times the upper limit of the normal operating voltage of the battery cell.

According to an embodiment of the present disclosure, the mass ratio of the graphite to the inorganic metal oxide may be 1:5, 4:11, 2:5, 3:5, 1:2, 2:3, 4:5, 1:1, 2:1, 7:3, etc. In this way, the temperature range in which the coating functions matches the temperature triggering thermal runaway in the battery cell, which reduces the overcharge cutoff temperature of the battery cell, realizing rapid heat dissipation from the battery cell.

According to an embodiment of the present disclosure, the specific type of graphite is not particularly limited, and can be selected by those skilled in the art according to actual needs. As some specific examples, graphite may include, but is not limited to, flake graphite, high-purity graphite block, highly oriented pyrolytic graphite, and expanded graphite. Flake graphite is natural crystalline graphite that resembles fish scales and has a layered structure. High-purity graphite block is a graphite product made from high-purity graphite through special processing, with a purity of over 99%, and it has excellent chemical stability, corrosion resistance, electrical conductivity, and thermal conductivity. Highly oriented pyrolytic graphite is a novel graphite material prepared by subjecting pyrolytic graphite to high temperature and high pressure treatment, with properties close to single-crystal graphite. Expanded graphite is a loose, porous, worm-like material obtained by intercalating, washing, drying, and high-temperature expanding natural flake graphite. In addition to retaining the excellent properties of natural graphite, it also possesses flexibility and compressibility that natural graphite lacks.

According to an embodiment of the present disclosure, the inorganic metal oxide should satisfy its thermal conductivity greater than 5 W/m·K, thus achieving heat conduction to the coating surface, followed by radiative heat dissipation to the outside. The specific type of the inorganic metal oxide is not particularly limited, and can be selected by those skilled in the art according to actual needs. As some specific examples, the inorganic metal oxide may include, but is not limited to, SrTiO₃, CaMnO₃, TiO₂, SiO₂, MgO, CaO, In₂O₃, ZnO, SnO₂, CuO, WO₂, MoO₂, VO₂, ZrO₂, FeO, and Fe₃O₄.

According to an embodiment of the present disclosure, the coating may further include a film-forming agent, a dispersing agent, or a curing agent, but are not limited to the above additives.

Specifically, the film-forming agent can bond the coating components together to form an overall uniform coating or coating film. Besides, it enhances wetting, penetration, and adhesion to the substrate or the underlying coating, while ensuring that the coating basically meets performance requirements. The specific type of the film-forming agent is not particularly limited, and can be selected by those skilled in the art according to actual needs. As some specific examples, the film-forming agent may include, but is not limited to, phenolic resin, asphalt, alkyd resin, amino resin, cellulose, perchloroethylene resin, olefin resin, acrylic resin, polyester resin, epoxy resin, and polyurethane resin. The olefin resins may include polypropylene, polyethylene, ethylene-vinyl acetate copolymer. The acrylic resins may include propionaldehyde resin, styrene-acrylic resin, silicone-acrylic resin, vinyl-acrylic resin, fluorine-acrylic resin, and tert-acrylic (tert-carbonate-acrylate) resin.

The dispersing agent can uniformly disperse the coating components that are difficult to dissolve in liquids, while also preventing the components from settling and aggregation. The specific type of the dispersing agent is not particularly limited, and can be selected by those skilled in the art according to actual needs. As some specific examples, the dispersing agent may include, but are not limited to, polyvalent carboxylic acid, silicate, triethylhexylphosphoric acid, sodium dodecyl sulfate, methylpentanol, cellulose derivative, polyacrylamide, guar gum, and fatty acid polyethylene glycol ester. The polyvalent carboxylic acid may include phthalic acid, succinic acid, gambogic acid, and citric acid. The silicate may include LBCB-1, fumed silica, precipitated silica, organobentonite, asbestos, kaolin, attapulgite, and a vinyl chloride compound prepared by emulsion method. The cellulose derivative may include cellulose nitrate, cellulose acetate, cellulose acetate butyrate, and cellulose xanthate.

The curing agent can promote the curing reaction of the coating components, enhancing properties such as hardness, corrosion resistance, and durability of the coating. The specific type of the curing agent is not particularly limited and can be selected by those skilled in the art according to actual needs. As some specific examples, the curing agent may include, but is not limited to, polyamide, phenalkamine, polyetheramine, and isocyanate.

According to an embodiment of the present disclosure, the slurry forming the coating further includes a solvent, which serves as a dissolving carrier for the various components, enabling uniform dispersion of each component and forming a stable dispersion system. The specific type of the solvent is not particularly limited, and can be selected by those skilled in the art according to actual needs. As some specific examples, the solvent may be N-methylpyrrolidone (NMP), which can be recovered at 80°C.

According to some specific embodiments of the present disclosure, on the basis of including graphite and inorganic metal oxide, the slurry of the coating may be added with a solvent, film forming agent, dispersing agent, and curing agent according to actual preparation needs.

Specifically, when the slurry of the coating includes at least one of the film forming agent, the dispersing agent, or the curing agent, together with graphite, inorganic metal oxide, and solvent, the components should satisfy the following:

The mass ratio of the total mass of at least one of the film-forming agent, the dispersing agent, or the curing agent together with graphite and inorganic metal oxide, to the solvent is (40 to 95):100, for example, 40:100, 45:100, 50:100, 55:100, 60:100, 65:100, 70:100, 75:100, 80:100, 85:100, 90:100, or 95:100. Thus, the coating exhibits good film forming properties, mechanical properties, and the like.

Specifically, when the slurry of the coating includes graphite, inorganic metal oxide, film forming agent, dispersing agent, curing agent, and solvent, the components should satisfy the following:

The mass of graphite is 2% to 30% of the mass of the solvent, for example, 2%, 4%, 6%, 8%, 10%, 12%, 14%, 16%, 18%, 20%, 22%, 24%, 26%, 28%, 30%, etc.; the mass of the inorganic metal oxide is 3% to 30% of the mass of the solvent, for example, 3%, 6%, 9%, 12%, 15%, 18%, 21%, 24%, 27%, 30%, etc.; the film forming agent is 30% to 40% of the mass of the solvent, for example, 30%, 31%, 32%, 33%, 34%, 35%, 36%, 37%, 38%, 39%, 40%, etc.; the dispersing agent is 5% to 20% of the mass of the solvent, for example, 5%, 10%, 15%, 20%; and the curing agent is 2% to 20% of the mass of the solvent, for example, 2%, 4%, 6%, 8%, 10%, 12%, 14%, 16%, 18%, 20%, etc. The coating thus prepared not only exhibits good heat dissipation performance, but also possesses excellent film-forming properties, durability, and other characteristics.

Specifically, the preparation method for the coating is not particularly limited. As some specific examples, the graphite and the inorganic metal oxide may be mixed to form the coating.

According to some specific embodiments of the present disclosure, the graphite and the inorganic metal oxide may be mixed and dispersed to form the coating. The mixing and dispersing methods for the graphite and the inorganic metal oxide are not particularly limited. According to a specific embodiment of the present disclosure, the graphite and the inorganic metal oxide may be mixed and then dispersed in a dispersing machine. Furthermore, a dispersion duration may be 1.5 h to 3 h, for example, 1.5 h, 2 h, 2.5 h, 3 h, etc.

According to some specific embodiments of the present disclosure, when the slurry of the coating further includes at least one of the film forming agent, dispersing agent, or curing agent, and/or solvent, the preparation method may further include: mixing at least one of the film forming agent, dispersing agent, and curing agent with graphite and inorganic metal oxide to form the coating; or mixing graphite, inorganic metal oxide, and solvent to form the coating; or mixing at least one of the film forming agent, dispersing agent, or curing agent with graphite, inorganic metal oxide, and solvent to form the coating. None of the above options affect the heat dissipation properties of the prepared coating.

Specifically, when the slurry of the coating includes graphite, inorganic metal oxide, film-forming agent, dispersing agent, curing agent, and solvent, the preparation method may specifically include: mixing graphite, inorganic metal oxide, film-forming agent, and dispersing agent in a designed ratio, uniformly dispersing them in the solvent for 1.5 hours to 3 hours to obtain a mixture, adding the dispersing agent and curing agent to the mixture, and continuously mixing the mixture at high speed for 2 hours to 4 hours to achieve uniform dispersion, thereby obtaining the coating. However, the preparation of the coating is not limited to the above-described methods.

According to some embodiments of the present disclosure, the coating includes graphite, an inorganic metal oxide, a film-forming agent, a dispersing agent, and a curing agent.

A mass ratio of the graphite, the inorganic metal oxide, the film-forming agent, the dispersing agent, and the curing agent ranges from (2 to 30): (3 to 30): (30 to 40): (5 to 20): (2 to 20).

According to some specific embodiments of the present disclosure, the mass ratio of the graphite, the inorganic metal oxide, the film-forming agent, the dispersing agent, and the curing agent is (2 to 30): (3 to 30): (30 to 40): (5 to 20): (2 to 20), for example, 2:3:30:5:2, 30:3:30:20:20, 8:22:35:15:2, etc. The coating thus prepared not only exhibits good heat dissipation performance, but also possesses excellent film-forming properties, durability, and other characteristics.

In a second aspect of the present disclosure, the present disclosure provides a battery. According to an embodiment of the present disclosure, the battery includes a battery cell and a coating provided on a surface of the battery cell. The coating is the coating described in the first aspect. Compared with the prior art, the battery has lower overcharge cut-off temperature and better safety.

According to some specific embodiments of the present disclosure, the coating can be applied to the surface of the battery cell and air-dried naturally. The coating application method is not particularly limited, and can be selected by those skilled in the art according to actual needs. Specific examples include spraying or roll coating. The thickness of the coating is also not particularly limited, and can be selected by those skilled in the art according to actual needs. As some specific examples, it may be 5 µm to 20 µm, for example, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, etc. The natural air-drying duration is also not particularly limited, and can be selected by those skilled in the art according to actual needs. As some specific examples, it may be greater than 1 hour, such as 1.5 hours, 2 hours, etc.

In this way, for battery cells experiencing thermal runaway, the coating can effectively disperse the heat accumulation of the battery cell between 100°C and 150°C, suppress side reactions at the battery's negative electrode, and prevent the melting and breakdown of the separator, thereby improving thermal runaway of the battery cell during overcharging and enhancing the battery's overcharge safety.

In a third aspect of the present disclosure, the present disclosure provides an electricity-consumption device. According to an embodiment of the present disclosure, the electricity-consumption device includes the battery described in the second aspect. Compared with the prior art, the electricity-consumption device has lower overcharge cut-off temperature and better safety.

Specifically, the above-described electricity-consumption device may include, but is not limited to, a mobile phone, a tablet, a laptop, an electric toy, an electric tool, an electric bicycle, an electric vehicle, a ship, a spacecraft, etc. The electric toy may include a fixed or mobile electric toy, for example, a game machine, an electric toy vehicle, an electric toy ship, an electric toy airplane, etc. The spacecraft may include an airplane, a rocket, a space shuttle, a spacecraft, etc.

In this way, the electricity-consumption device has all the advantages of the battery, which will not be repeated here for brevity.

The embodiments of the present disclosure are described in detail below. It should be noted that, the embodiments described below are illustrative only, and are intended to explain, rather than limit, the present disclosure. The concentrated sulfuric acid used in the following embodiments refers to a concentrated sulfuric acid chemical with a mass fraction of 98%. In addition, unless explicitly stated otherwise, all reagents used in the following embodiments are commercially available, or can be synthesized according to the methods described herein or known methods. Any unspecified reaction conditions can be easily determined by those skilled in the art.

### Example 1

High-purity graphite block, MgO, phenolic resin and polyurethane resin in a mass ratio of 1:5, and LBCB-1 were added into NMP, followed by mixing and dispersing for 2h to 5h to obtain a mixture. Subsequently, LBCB-1 and phenalkamine were added into the mixture and mixed for 5h to 10h to obtain a heat dissipation slurry. The heat dissipation slurry was coated on the four side surfaces of a battery cell casing and naturally air-dried to obtain a coated battery cell.

NMP was added in a mass of 10 g, along with 0.8 g of high-purity graphite block, 2.2 g of MgO, a total of 3.5 g of phenolic resin and polyurethane resin, 1.5 g of LBCB-1, and 1 g of phenalkamine.

The battery cell used had dimensions of 71 mm in length, 173 mm in width, and 207 mm in height, with a capacity of 280 Ah.

### Example 2

Example 2 differed from Example 1 only in that high-purity graphite block was added in a mass of 1 g along with 2 g of MgO.

All other conditions were the same as those of Example 1.

### Example 3

Example 3 differed from Example 1 only in that high-purity graphite block was added in a mass of 1.2 g along with 1.8 g of MgO.

All other conditions were the same as those of Example 1.

### Example 4

Example 4 differed from Example 1 only in that high-purity graphite block was added in a mass of 1.5 g along with 1.5 g of MgO.

All other conditions were the same as those of Example 1.

### Example 5

Example 5 differed from Example 1 only in that high-purity graphite block was added in a mass of 2 g along with 1 g of MgO.

All other conditions were the same as those of Example 1.

### Example 6

Example 6 differed from Example 1 only in that high-purity graphite block was added in a mass of 2.1 g along with 0.9 g of MgO.

All other conditions were the same as those of Example 1.

### Example 7

Example 7 differed from Example 1 only in that high-purity graphite block was added in a mass of 0.5 g along with 2.5 g of MgO.

All other conditions were the same as those of Example 1.

### Example 8

Example 8 differed from Example 1 only in that MgO was replaced by SiO₂.

All other conditions were the same as those of Example 1.

### Example 9

Example 9 differed from Example 1 only in that MgO was replaced by CaO.

All other conditions were the same as those of Example 1.

### Example 10

Example 10 differed from Example 1 only in that MgO was replaced by ZnO.

All other conditions were the same as those of Example 1.

### Comparative Example 1

Comparative Example 1 differed from Example 1 only in that no coating was applied to the battery cell casing.

### Comparative Example 2

Comparative Example 2 differed from Example 1 only in that high-purity graphite block was added in a mass of 0.2 g along with 2.8 g of MgO.

All other conditions were the same as those of Example 1.

### Comparative Example 3

Comparative Example 3 differed from Example 1 only in that high-purity graphite block was added in a mass of 2.5 g along with 0.5 g of MgO.

All other conditions were the same as those of Example 1.

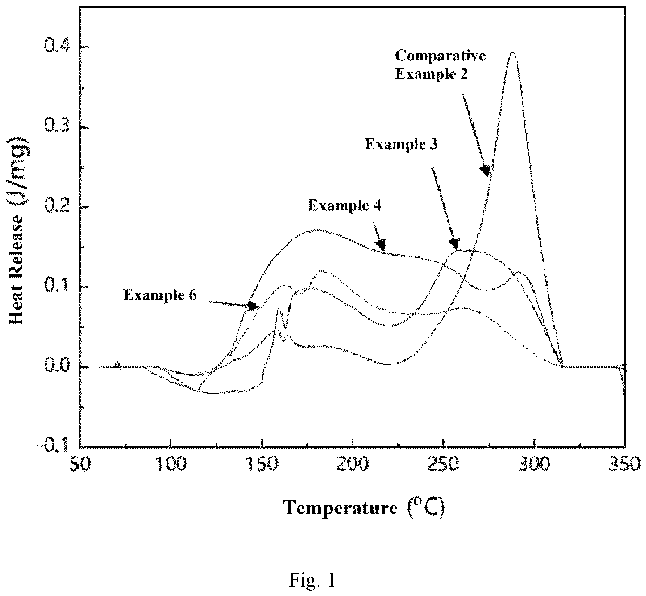

The coatings prepared in Comparative Example 2, Example 3, Example 4, and Example 6 were subjected to differential scanning calorimetry (DSC) tests for their heat release performance between 50°C and 350°C using a scan rate of 5 K/min, in order to characterize the heat dissipation temperature range of the coatings in practical application. The results were shown in FIG. 1, and the specific peak temperatures of exothermic peaks and the heat releases were shown in Table 1.

**Table 1**

| Scheme | First Temperature Range (120°C to 220°C) | | | Second Temperature Range (220°C to 270°C) | | Entire Temperature Range (100°C to 310°C) |
|---|---|---|---|---|---|---|
| | Peak Temperature of Exothermic Peak | | Total Heat Release | Peak Temperature of Exothermic Peak | Total Heat Release | Total Heat Release |
| Example 3 | 155°C | 180°C | 5.11 J/mg | 255°C | 10.86 J/mg | 39.12 J/mg |
| Example 4 | 175°C | | 22.35 J/mg | 230°C | 17.91 J/mg | 55.87 J/mg |
| Example 6 | 155°C | 190°C | 14.25 J/mg | 270°C | 15.18 J/mg | 37.64 J/mg |
| Comparative Example 2 | 155°C | | 14.25 J/mg | - | 8.62 J/mg | 29.72 J/mg |

| | | | | | | |
|---|---|---|---|---|---|---|
| Note: "-" indicates absence. | | | | | | |

Overcharge tests were performed on the battery cells in Examples 1 to 10 and Comparative Examples 1 to 4. The specific method included: (1) fully charging the battery cell at 1.0 C, followed by a 5-hour rest period; (2) overcharging the battery cell at 1.0 C at 25°C; (3) constant current overcharging until the battery cell voltage reached 1.5 times the normal maximum operating voltage of the battery cell, while monitoring the overcharge cut-off temperature of the battery cell's relatively large side surface during the whole process. The results were shown in Table 2.

**Table 2**

| Scheme | Overcharge Cut-Off Temperature (°C) |
|---|---|
| Example 1 | 151 |
| Example 2 | 121 |
| Example 3 | 89 |
| Example 4 | 87 |
| Example 5 | 135 |
| Example 6 | 175 |
| Example 7 | 178 |
| Example 8 | 162 |
| Example 9 | 156 |
| Example 10 | 168 |
| Comparative Example 1 | 182 |
| Comparative Example 2 | 180 |
| Comparative Example 3 | 189 |

The results showed that when the mass ratio of graphite to inorganic metal oxide was (1:5) to (7:3), the heat accumulation of the battery cell during overcharging can be reduced, leading to lower temperatures of the larger side surfaces of the battery cells.

The mass ratio of graphite to inorganic metal oxide was preferably (4:11) to (2:1), as a significant reduction in the overcharge cut-off temperature was observed, indicating enhanced heat dissipation. When the mass ratio of graphite to inorganic metal oxide was (2:3) to (1: 1), the coating exhibited superior heat dissipation adaptability in two-dimensional and three-dimensional spaces, resulting in the lowest overcharge cut-off temperature. These findings were consistent with DSC test results, which confirmed that the highest heat dissipation occurred at lower temperatures.

On the contrary, when the ratio of graphite to inorganic metal oxide was either too high or too low, the heat dissipation performance of the coating in two-dimensional and three-dimensional spaces was not well balanced, resulting in adequate overall heat dissipation in a high temperature range but compromised heat dissipation in a low temperature range (as shown in Comparative Example 2). In this way, thermal runaway in a low temperature range for the whole battery cell failed to be effectively suppressed, and the overcharge cut-off temperature did not decrease significantly.

Reference throughout this specification to terms such as "an embodiment", "some embodiments", "an example", "specific example", or "some examples" means that the specific features, structures, materials, or characteristics described in connection with an embodiment or example are included in at least one embodiment or example of the present disclosure. The illustrative expressions of the above terms throughout this specification do not necessarily refer to the same embodiment or example. Further, the described specific features, structures, materials, or characteristics may be combined in any suitable manner in one or more embodiments or examples. In addition, different embodiments or examples and the features of the different embodiments or examples described in the specification may be combined by those skilled in the art without mutual contradiction.

Although embodiments of the present disclosure have been illustrated and described above, it should be understood that the above embodiments are merely illustrative, and cannot be construed to limit the present disclosure. For those skilled in the art, various modifications, adjustments, substitutions, or variations can be made to the embodiments without departing from the scope of the present disclosure.

## Claims

1. A coating, a total heat release of the coating in a first temperature range and a second temperature range ranging from 30 J/mg to 60 J/mg, wherein:
the first temperature range is from 120°C to 220°C, and
the second temperature range is from 220°C to 270°C.

2. The coating according to claim 1, wherein:
a heat release of the coating in the first temperature range ranges from 5 J/mg to 30 J/mg, and
a heat release of the coating in the second temperature range ranges from 7 J/mg to 25 J/mg.

3. The coating according to claim 1, wherein a DSC curve of the coating has a first exothermic peak in the first temperature range with a peak temperature of 145°C to 185°C, and a second exothermic peak in the second temperature range with a peak temperature of 220°C to 270°C.

4. The coating according to any one of claims 1 to 3, comprising:
graphite; and
an inorganic metal oxide,
wherein a mass ratio of the graphite to the inorganic metal oxide ranges from (1:5) to (7:3).

5. The coating according to claim 4, wherein the inorganic metal oxide satisfies at least one of:
the inorganic metal oxide has a thermal conductivity greater than 5 W/m·K; or
the inorganic metal oxide comprises at least one of SrTiO₃, CaMnO₃, TiO₂, SiO₂, MgO, CaO, In₂O₃, ZnO, SnO₂, CuO, WO₂, MoO₂, VO₂, ZrO₂, FeO, or Fe₃O₄.

6. The coating according to claim 4, wherein the graphite comprises at least one of flake graphite, high-purity graphite block, highly oriented pyrolytic graphite, or expanded graphite.

7. The coating according to claim 4, wherein the mass ratio of the graphite to the inorganic metal oxide ranges from (4:11) to (2:1).

8. The coating according to claim 4, wherein the coating further comprises at least one of a film-forming agent, a dispersing agent, or a curing agent.

9. The coating according to claim 8, wherein the film-forming agent comprises at least one of phenolic resin, asphalt, alkyd resin, amino resin, cellulose, olefin resin, acrylic resin, polyester resin, epoxy resin, or polyurethane resin, wherein:
in the case that the film-forming agent comprises olefin resin, the olefin resin comprises at least one of polypropylene, polyethylene, or ethylene-vinyl acetate copolymer; and
in the case that the film-forming agent comprises acrylic resin, the acrylic resin comprises at least one of propionaldehyde resin, styrene-acrylic resin, silicone-acrylic resin, vinyl-acrylic resin, fluorine-acrylic resin, or tert-acrylic resin.

10. The coating according to claim 8, wherein the dispersing agent comprises at least one of polyvalent carboxylic acid, silicate, triethylhexylphosphoric acid, sodium dodecyl sulfate, methylpentanol, cellulose derivative, polyacrylamide, guar gum, or fatty acid polyethylene glycol ester.

11. The coating according to claim 10, wherein:
in the case that the dispersing agent comprises polyvalent carboxylic acid, the polyvalent carboxylic acid comprises at least one of phthalic acid, succinic acid, gambogic acid, or citric acid;
in the case that the dispersing agent comprises silicate, the silicate comprises at least one of LBCB-1, fumed silica, precipitated silica, organobentonite, asbestos, kaolin, attapulgite, or a vinyl chloride compound prepared by emulsion method; and
in the case that the dispersing agent comprises cellulose derivative, the cellulose derivative comprises at least one of cellulose nitrate, cellulose acetate, cellulose acetate butyrate, or cellulose xanthate.

12. The coating according to claim 8, wherein the curing agent comprises at least one of polyamide, phenalkamine, polyetheramine, or isocyanate.

13. The coating according to claim 4, comprising graphite, an inorganic metal oxide, a film-forming agent, a dispersing agent, and a curing agent,
wherein a mass ratio of the graphite, the inorganic metal oxide, the film-forming agent, the dispersing agent, and the curing agent ranges from (2 to 30): (3 to 30): (30 to 40): (5 to 20): (2 to 20).

14. A battery, comprising:
a battery cell; and
a coating provided on a surface of the battery cell, wherein:
a total heat release of the coating in a first temperature range and a second temperature range ranges from 30 J/mg to 60 J/mg,
the first temperature range is from 120°C to 220°C, and
the second temperature range is from 220°C to 270°C.

15. An electricity-consumption device, comprising a battery, the battery comprising a battery cell and a coating provided on a surface of the battery cell, wherein:
a total heat release of the coating in a first temperature range and a second temperature range ranges from 30 J/mg to 60 J/mg,
the first temperature range is from 120°C to 220°C, and
the second temperature range is from 220°C to 270°C.
